# EUROPÄISCHE PATENTANMELDUNG

(11) **EP 4 029 892 A1**
(43) Veröffentlichungstag der Anmeldung: **20.07.2022**
(21) Anmeldenummer: 21151281.9
(22) Anmeldetag: 13.01.2021
(51) Int. Cl.: C08G 18/18, C08G 18/38, C08G 18/79, C09D 175/04, C09D 175/00

(54) **URETDIONGRUPPEN ENTHALTENDE ZUSAMMENSETZUNGEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung von Thioallophanatgruppen enthaltenden Verbindungen, umfassend Umsetzung von A) mindestens einer, mindestens eine Uretdiongruppe aufweisenden Komponente mit B) mindestens einer, mindestens eine Thiolgruppe aufweisenden Komponente in Gegenwart von C) mindestens einem Katalysator der allgemeinen Formel (I) 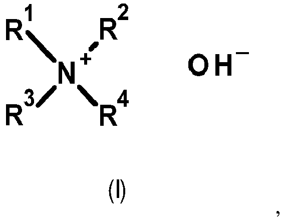 in welcher R¹, R², R³ und R⁴ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei R¹ und R² auch in Kombination untereinander gemeinsam mit dem Stickstoffatom und gegebenenfalls mit einem weiteren Heteroatom heterocyclische Ringe mit 3 bis 8 Kohlenstoffatomen bilden können, die gegebenenfalls weiter substituiert sein können, mit der Maßgabe, dass mindestens einer der Reste R¹ bis R⁴ mindestens zwei Kohlenstoffatome aufweist.

## Beschreibung

Die vorliegende Erfindung betrifft ein Verfahren zur Herstellung von Thioallophanatgruppen enthaltenden Verbindungen, Uretdiongruppen enthaltende Zusammensetzungen und die Verwendung dieser Zusammensetzungen zur Herstellung von Polythiourethan-Kunststoffen oder Beschichtungen. Außerdem betrifft die Erfindung Beschichtungsmittel, enthaltend die Zusammensetzungen, und mit dem Beschichtungsmittel beschichtete Substrate.

Uretdiongruppen enthaltende Polyadditionsprodukte sind als Vernetzerkomponenten für thermisch vernetzbare Polyurethan (PUR)-Lack- und Klebstoffzusammensetzungen bekannt. Als Vernetzungsprinzip dient bei diesen Produkten die thermische Ringöffnung der Uretdiongruppen zu Isocyanatgruppen und deren Reaktion mit einem hydroxyfunktionellen oder aminofunktionellen Bindemittel.

In der Praxis finden Uretdiongruppen enthaltende Vernetzer heute fast ausschließlich zur Herstellung abspalterfreier Polyurethan-(PUR)-Pulverlacke Verwendung (z. B. DE-A 2 312 391, DE-A 2 420 475, EP-A 0 045 994, EP-A 0 045 996, EP-A 0 045 998, EP-A 0 639 598 oder EP-A 0 669 353). Die Verwendung Uretdiongruppen enthaltender Polyurethane als Vernetzerkomponenten für lösemittelhaltige oder wäßrige Einkomponentensystem ist zwar ebenfalls bereits beschrieben (z. B. WO 99/11690, WO 2014/053269), unter anderem aufgrund der vergleichsweise geringen Reaktivität der in Form von Uretdionstrukturen intern blockiert vorliegenden Isocyanatgruppen, die in Kombination mit Polyolen in der Regel Einbrenntemperaturen von mindestens 160°C erforderlich macht, konnten sich solche Systeme im Markt bisher aber nicht durchsetzen.

Es hat nicht an Versuchen gefehlt, die Aushärtetemperaturen Uretdiongruppen enthaltender Lacksysteme durch Einsatz geeigneter Katalysatoren zu erniedrigen. Zu diesem Zweck wurden bereits unterschiedliche Verbindungen vorgeschlagen, beispielsweise die aus der Polyurethanchemie bekannten metallorganischen Katalysatoren, wie Zinn(II)-acetat, Zinn(II)-octoat, Zinn(II)-ethylcaproat, Zinn(II)-laurat, Dibutylzinndiacetat, Dibutylzinndilaurat, Dibutylzinnmaleat (z. B. EP-A 0 045 994, EP-A 0 045 998, EP-A 0 601 079, WO 91/07452 oder DE-A 2 420 475), Eisen(III)-chlorid, Zinkchlorid, Zink-2-ethylcaproat und Molybdänglykolat, tertiäre Amine, wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan und N,N'-Dimethylpiperazin (z. B. EP-A 0 639 598) oder N,N,N'-trisubstituierte Amidine, insbesondere bicyclische Amidine, wie 1,5-Diazabicyclo[4.3.0]non-5-en (DBN) und 1,8-Diazabicyclo[5.4.0]undec-7ene (DBU) (z. B. EP-A 0 803 524 oder WO 2011/115669).

Von diesen Katalysatoren erlauben die genannten bicyclischen Amidine die niedrigsten Einbrenntemperaturen. Sie führen gleichzeitig jedoch zu einer für viele Anwendungsbereiche inakzeptabel hohen Vergilbung.

Nach der Lehre der EP-A 1 137 689 werden Lewissäure-Katalysatoren, wie z. B. die vorstehend genannten Zinn- oder Zinkverbindungen, durch saure Gruppen, wie z. B. Carboxylgruppen, inhibiert. Ihre volle katalytische Aktivität können sie in einem Uretdionsystem daher nur entfalten, wenn das eingesetzte hydroxyfunktionelle Bindemittel frei von Carboxylgruppen ist. Dies lässt sich beispielsweise durch gleichzeitige Zugabe einer ausreichenden Menge eines gegenüber Carboxylgruppen reaktiven Agens, beispielsweise eines Carbodiimids oder eines Epoxids, erreichen.

In Abwesenheit von Carboxylgruppen bzw. unter Mitverwendung einer gegenüber Carboxylgruppen reaktiven Verbindung stellen auch quarternäre Ammoniumhydroxide und Ammoniumfluoride (z. B. EP-A 1 334 987), Ammoniumcarboxylate (z. B. EP-A 1 475 399, EP-A 1 522 547), Phosphoniumhydroxide, -alkoholate oder -carboxylate (z. B. WO 2005/085315) oder Metallhydroxide und -alkoholate (z. B. EP-A 1 475 400) geeignete Katalysatoren dar, mit denen sich die Aushärtetemperatur von Uretdion/Polyolsystemen deutlich absenken lässt.

Die WO 2020/065438 A1 beschreibt zweikomponentige Klebstoffzusammensetzungen, bei denen erstmals Polythiole als Reaktionspartner für Uretdionvernetzer zum Einsatz kommen. Diese Zusammensetzungen härten nach Zugabe aminischer Beschleuniger, wie z. B. 1,8-Diazabicyclo[5.4.0]undec-7-en (DBU), Tris-(dimethylaminomethyl)-phenol oder Tetramethylammoniumhydroxid, gegebenenfalls bereits bei Raumtemperatur innerhalb weniger Stunden aus.

Nachteilig ist jedoch, dass sich mit dieser katalysierten Polythiol/Uretdion-Zusammensetzung keine optisch ansprechenden Lacke und Beschichtungen herstellen lassen, da unzumutbare Oberflächendefekte, insbesondere starke Verlaufsstörungen und Blasenbildungen, auftreten.

Wie jetzt überraschend gefunden wurde, erlauben quarternäre Ammoniumhydroxide mit längerkettigen Alkylsubstituenten am Stickstoffatom als das in der WO 2020/065438 eingesetzte Tetramethylammoniumhydroxid Beschichtungssysteme auf Basis Uretdiongruppen enthaltender Vernetzerkomponenten und Polythiolen bei niedrigen Temperaturen unter Bildung von Thioallophanatgruppen auszuhärten, wobei vollvernetzte Lackfilme mit ausgezeichnetem Verlauf und hohem Glanz erhalten werden.

Gegenstand der vorliegenden Erfindung ist ein Verfahren zur Herstellung von Thioallophanatgruppen enthaltenden Verbindungen umfassend Umsetzung von
A) mindestens einer, mindestens eine Uretdiongruppe aufweisenden Komponente mit
B) mindestens einer, mindestens eine Thiolgruppe aufweisenden Komponente in Gegenwart
C) mindestens eines Katalysators der allgemeinen Formel 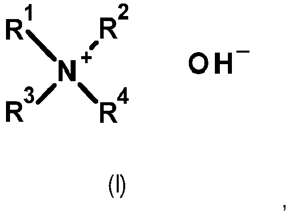 in welcher
   R¹, R², R³ und R⁴ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei R¹ und R² auch in Kombination untereinander gemeinsam mit dem Stickstoffatom und gegebenenfalls mit einem weiteren Heteroatom heterocyclische Ringe mit 3 bis 8 Kohlenstoffatomen bilden können, die gegebenenfalls weiter substituiert sein können, mit der Maßgabe, dass mindestens einer der Reste R¹ bis R⁴ mindestens zwei Kohlenstoffatome aufweist.

Erfindungsgemäß bedeuten die Bezugnahmen auf "umfassend", "enthaltend" usw. bevorzugt "im Wesentlichen bestehend aus" und ganz besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt.

Eine "organische Verbindung" oder "organischer Rest" enthält mindestens eine Einheit, die eine kovalente Kohlenstoff-Wasserstoff-Bindung umfasst.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als Kohlenwasserstoffreste, die sowohl aus einer aromatischen als auch aus einer gesättigten oder ungesättigten Kohlenwasserstoffgruppe bestehen, die direkt an den aromatischen Rest gebunden ist.

Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z. B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z. B. Pyrimidin, Pyrazin, Tetrahydropyran oder Tetrahydrofuran.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens eines Katalysators" bedeutet daher beispielsweise, dass nur eine Art von Verbindung oder mehrere verschiedene Arten von Verbindungen dieser Art, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99%" für "99,0%".

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Für den Fall, dass die Gruppen oder Verbindungen als "gegebenenfalls substituiert" oder "substituiert" offenbart werden, sind geeignete Substituenten -F, -Cl, -Br, -I, -OH, - OCH₃, -OCH₂CH₃, -O-Isopropyl oder -O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Bei der Uretdiongruppe aufweisenden Komponente A) handelt es sich um beliebige, gegebenenfalls isocyanatfunktionelle Uretdiongruppen enthaltende Verbindungen A1), wie sie nach an sich bekannten Methoden, beispielsweise durch Oligomerisierung monomerer Isocyanate, erhältlich sind, und/oder durch Umsetzung isocyanatfunktioneller Uretdiongruppen enthaltender Verbindungen A1) mit Alkoholen und/oder Aminen erhältliche Polyadditionsverbindungen A2).

In einer ersten bevorzugten Ausführungsform handelt es sich bei der Komponente A) um eine isocyanatfunktionelle Uretdiongruppen enthaltende Verbindungen A1) und/oder durch Umsetzung isocyanatfunktioneller Uretdiongruppen enthaltender Verbindungen A1) mit Alkoholen und/oder Aminen erhältliche Polyadditionsverbindungen A2).

Geeignete Isocyanate zur Herstellung der Uretdiongruppen enthaltenden Verbindungen A1) sind beliebige, auf verschiedene Weise, beispielsweise durch Phosgenierung in der Flüssig- oder Gasphase oder auf phosgenfreien Weg, wie z. B. durch thermische Urethanspaltung, zugängliche Mono-, Di- und Triisocyanate mit aliphatisch, cycloaliphatisch, araliphatisch und/oder aromatisch gebundenen Isocyanatgruppen.

Bevorzugte Monoisocyanate sind solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat.

Bevorzugte Diisocyanate sind solche des Molekulargewichtsbereichs 140 bis 400, wie z. B. 1,4-Diisocyanatobutan, 1,5-Diisocyanatopentan (Pentamethylendiisocyanat, PDI), 1,6-Diisocyanatohexan (Hexamethylendiisocyanat, HDI), 2-Methyl-1,5-diisocyanatopentan, 1,5-Diisocyanato-2,2-dimethyl-pentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1,3-Diisocyanato-2(4)-methylcyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-Isocyanato-1 - methyl-4(3)isocyanato-methylcyclohexan, Bis-(isocyanatomethyl)-norbornan (NBDI), 1,3- und 1,4-Bis(isocyanatomethyl)benzol (Xylylendiisocyanat, XDI), 1,3- und 1,4-Bis(2-isocyanatopropan-2-yl)benzol (Tetramethylxylylendiisocyanat, TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (Toluylendiisocyanat, TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2'-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanatoder 2,4-Diisocyanato-1-[(5-isocyanato-2-methylphenyl)methyl]benzol.

Weitere ebenfalls geeignete Diisocyanate finden sich darüber hinaus beispielsweise in Justus Liebigs Annalen der Chemie Band 562 (1949) S. 75 - 136.

Als besonders geeignetes Triisocyanat sei beispielhaft 4-Isocyanatomethyl-1,8-octandiisocyanat (Triisocyanatononan; TIN) genannt.

Zur Herstellung der Uretdiongruppen enthaltenden Verbindungen A1) können auch Mischungen aus mindestens zwei solcher Mono-, Di- und/oder Triisocyanate zum Einsatz kommen.

Bevorzugt kommen zu Herstellung der Uretdiongruppen enthaltenden Verbindungen A1) monomere Diisocyanate zum Einsatz.

Besonders bevorzugt ist die Verwendung von PDI, HDI, IPDI, XDI, NBDI und/oder H₁₂-MDI.

Die Herstellung der Uretdiongruppen enthaltenden Verbindungen A1) kann nach unterschiedlichen Methoden erfolgen, denen im allgemeinen die üblichen literaturbekannten Verfahren zur Oligomerisierung einfacher Diisocyanaten zugrunde liegen, wie sie beispielsweise in J. Prakt. Chem. 336 (1994) 185 - 200, der DE-A 16 70 666, DE-A 19 54 093, DE-A 24 14 413, DE-A 24 52 532, DE-A 26 41 380, DE-A 37 00 209, DE-A 39 00 053, DE-A 39 28 503, EP-A 336 205, EP-A 339 396 und EP-A 798 299 beschrieben sind.

Die Uretdiongruppen enthaltenden Verbindungen A1) können bei ausschließlicher Verwendung oder anteiliger Mitverwendung von Monoisocyanaten frei von Isocyanatgruppen sein. Vorzugsweise kommen zu ihrer Herstellung jedoch zumindest zusätzlich Di- und/oder Triisocyanate in solchen Mengen zum Einsatz, dass Uretdiongruppen enthaltende Verbindungen A1) erhalten werden, die eine mittlere NCO-Funktionalität von mindestens 1,6, vorzugsweise von 1,8 bis 3,5, besonders bevorzugt von 1,9 bis 3,2, ganz besonders bevorzugt von 2,0 bis 2,7 aufweisen.

Bei mittleren NCO-Funktionalitäten von > 2,0 liegen in diesen isocyanatfunktionellen Uretdiongruppen enthaltenden Verbindungen A1) neben linearen difunktionellen Uretdionstrukturen noch weitere, mindestens trifunktionelle Polyisocyanatmoleküle vor. Bei diesen höherfunktionellen Bestandteilen der Verbindungen A1) handelt es sich insbesondere um die bekannten Folgeprodukte von Diisocyanaten mit Isocyanurat-, Allophanat-, Biuret-, Urethan- und/oder Iminooxadiazindionstruktur.

Die Uretdiongruppen enthaltenden Verbindungen A1) werden im allgemeinen unmittelbar im Anschluß an ihre oben beschriebene Herstellung durch Modifizierung einfacher monomerer Mono-, Di- und/oder Triisocyanate nach bekannten Methoden, beispielsweise durch Dünnschichtdestillation oder Extraktion, vom nicht umgesetzten Monomerüberschuß befreit. Sie weisen daher in der Regel Restgehalte an monomeren Diisocyanaten von weniger als 5 Gew.-%, vorzugsweise weniger als 2 Gew.-%, besonders bevorzugt weniger als 1 Gew.-%, auf.

Unabhängig vom gewählten Herstellverfahren weisen die Uretdiongruppen enthaltenden Verbindungen A1) im Allgemeinen einen Gehalt an Uretdionstrukturen (berechnet als C₂N₂O₂, Molekulargewicht = 84) von 10 bis 25 Gew.-%, vorzugsweise von 12 bis 23 Gew.-%, besonders bevorzugt von 14 bis 20 Gew.-% auf.

In einer weiteren bevorzugten Ausführungsform handelt es sich bei der Komponente A1) um Uretdiongruppen enthaltende Verbindungen auf Basis von PDI, HDI, IPDI, XDI, NBDI und/oder H₁₂-MDI, die bevorzugt eine mittlere NCO-Funktionalität von mindestens 1,6 aufweisen und besonders bevorzugt einen Gehalt an Uretdionstrukturen (berechnet als C₂N₂O₂, Molekulargewicht = 84) von 10 bis 25 Gew.-% aufweisen.

Als Uretdiongruppen aufweisende Komponente A) der erfindungsgemäßen Zusammensetzungen ebenfalls geeignet sind Polyadditionsverbindungen A2), wie sie sich durch Umsetzung zumindest eines Teils der freien Isocyanatgruppen der vorstehend beschriebenen isocyanatfunktionellen Uretdiongruppen enthaltenden Verbindungen A1) mit Alkoholen und/oder Aminen erhalten lassen.

Geeignete Alkohole zur Herstellung der Polyadditionsverbindungen A2) sind beispielsweise einfache aliphatische bzw. cycloaliphatische Monoalkohole, wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole und Hydroxymethylcyclohexan, Etheralkohole, wie 2-Methoxyethanol, 2-Ethoxyethanol, 2-Propoxyethanol, 2-Butoxyethanol, Diethylenglykolmonomethylether, Diethylenglykolmonoethylether, Diethylenglykolmonobutylether, 3-Methoxy-1-butanol und Glycerin-1,3-diethylether, Esteralkohole, wie Hydroxyethylacetat, Butylglycolat, Ethyllactat, Glycerindiacetat oder solche, wie sie sich durch Umsetzung der genannten Monoalkohole mit Lactonen erhalten lassen oder Etheralkohole, wie sie sich durch Umsetzung der genannten Monoalkohole mit Alkylenoxiden, insbesondere Ethylenoxid und/oder Propylenoxid, erhalten lassen.

Ebenfalls geeignete Alkohole zur Herstellung der Polyadditionsverbindungen A2) sind beliebige mindestens difunktionellen Polyole des Molekulargewichtsbereiches 62 bis 22000, vorzugsweise solche, die eine mittlere Funktionalität von 2 bis 6 und ein zahlenmittleres Molekulargewicht von 62 bis 18000, besonders bevorzugt eine mittlere Funktionalität von 2 bis 4 und ein zahlenmittleres Molekulargewicht von 90 bis 12000, aufweisen.

Geeignete Polyole zur Herstellung der Polyadditionsverbindungen A2) sind beispielsweise einfache mehrwertige Alkohole mit 2 bis 14, vorzugsweise 4 bis 10 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2,6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, 3(4),8(9)-Bis-(hydroxymethyl)-tricyclo-[5.2.1.0^{2,6}]decane, Di-Trimethylolpropan, 2,2-Bis(hydroxymethyl)-1,3-propandiol (Pentaerythrit), 2,2,6,6-Tetrakis(hydroxymethyl)-4-oxa-heptan-1,7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsäureneopentylglykolester.

Geeignete Polyole zur Herstellung der Polyadditionsverbindungen A2) sind auch die üblichen aus der Polyurethanchemie bekannten polymeren Polyetherpolyole, Polyesterpolyole, Polycarbonatpolyole und/oder Polyacrylatpolyole, die üblicherweise ein zahlenmittleres Molekulargewicht von 200 bis 22000, vorzugsweise von 250 bis 18000, besonders bevorzugt von 250 bis 12000 aufweisen. Ein breiter Überblick über geeignete polymere Polyole zur Herstellung der Polyadditionsverbindungen A2) findet sich beispielsweise in N. Adam et al. Polyurethanes. In: Ullmann's Encyclopedia of Industrial Chemistry, Wiley-VCH Verlag GmbH & Co. KgaA; 2005. URL: https://doi.org/10.1002/14356007.a21_665.pub2. Geeignete Polyetherpolyole sind beispielsweise solche der in der DE 26 22 951 B, Spalte 6, Zeile 65 bis Spalte 7, Zeile 26, der EP-A 0 978 523 Seite 4, Zeile 45 bis Seite 5, Zeile 14 oder der WO 2011/069966, Seite 4, Zeile 20 bis Seite 5, Zeile 23 genannten Art, sofern sie den oben gemachten Angaben hinsichtlich Funktionalität und Molekulargewicht entsprechen. Besonders bevorzugte Polyetherpolyole sind Anlagerungsprodukte von Ethylenoxid und/oder Propylenoxid an 1,2-Propandiol, 1,3-Propandiol, Glycerin, Trimethylolpropan, Ethylendiamin und/oder Pentaerythrit oder die beispielsweise gemäß Angew. Chem. 72, 927 (1960) (https://doi.org/10.1002/ange.19600722402) durch Polymerisation von Tetrahydrofuran erhältlichen Polytetramethylenetherglykole mit zahlenmittleren Molekuargewichten von 400 g/mol bis 4000 g/mol.

Geeignete Polyesterpolyole sind beispielsweise solche der in der EP-A 0 978 523, Seite 5, Zeilen 17 bis 47 oder der EP-A 0 659 792, Seite 6, Zeilen 32 bis 45 genannten Art, sofern sie den oben gemachten Angaben hinsichtlich Funktionalität und Molekulargewicht entsprechen. Besonders bevorzugte Polyesterpoylole sind Kondensationsprodukte mehrwertiger Alkohole, wie z. B. 1,2-Ethandiol, 1,2-Propandiol, Diethylenglykol, 1,4-Butandiol, 1,6-Hexandiol, Neopentylglykol, 1,4-Cyclohexandimethanol, 1,4-Cyclohexandiol, Perhydrobisphenol, 1,1,1-Trimethylolpropan, 1,2,3-Propantriol, Pentaerythrit und/oder Sorbitol, mit unterschüssigen Mengen an mehrwertigen Carbonsäuren bzw. Carbonsäureanhydriden, wie z. B. Bernsteinsäure, Adipinsäure, Sebazinsäure, Dodecandisäure, Glutarsäureanhydrid, Maleinsäureanhydrid, Phthalsäureanhydrid, Isophthalsäure, Terephthalsäure, Trimellitsäure Hexahydrophthalsäureanhydrid und/oder Tetrahydrophthalsäureanhydrid, oder solche, wie sie in an sich bekannter Weise aus Lactonen, wie z. B. ε-Caprolacton, und einfachen mehrwertigen Alkoholen, wie z. B. den oben beispielhaft genannten, als Startermolekülen unter Ringöffnung erhältlich sind.

Geeignete Polycarbonatpolyole sind insbesondere die an sich bekannten Umsetzungsprodukte zweiwertiger Alkohole, beispielsweise solcher, wie sie oben in der Liste der mehrwertigen Alkohole beispielhaft genannt sind, mit Diarylcarbonaten, wie z. B. Diphenylcarbonat, Dimethylcarbonat oder Phosgen. Ebenfalls geeignete Polycarbonatpolyole sind solche, die neben Carbonatstrukturen zusätzlich Estergruppen enthalten. Hierbei handelt es sich insbesondere um die an sich bekannten Polyestercarbonatdiole, wie sie beispielsweise gemäß der Lehre der DE-AS 1 770 245 durch Umsetzung zweiwertiger Alkohole mit Lactonen, wie insbesondere ε-Caprolacton, und anschließende Reaktion der dabei entstehenden Polyesterdiole mit Diphenyl- oder Dimethylcarbonat erhalten werden können.

Geeignete Polyacrylatpolyole sind beispielsweise solche der in WO 2011/124710 Seite 10, Zeile 32 bis Seite 13, Zeile 18 genannten Art, sofern sie den oben gemachten Angaben hinsichtlich Funktionalität und Molekulargewicht entsprechen. Besonders bevorzugte Polyacrylatpolyole sind Polymerisate bzw. Copolymerisate von Hydroxyalkylestern der Acrylsäure oder Methacrylsäure, wie z. B. Hydroxyethyl(meth)acrylat, Hydroxypropyl(meth)acrylat oder Hydroxybutyl(meth)acrylat, gegebenenfalls gemeinsam mit Acrylsäurealkylestern und/oder Methacrylsäurealkylestern, wie z. B. Methyl(meth)acrylat, Ethyl(meth)acrylat, n-Butyl(meth)acrylat, iso-Butyl(meth)acrylat, 2-Ethylhexyl(meth)acrylat, Cyclohexyl(meth)acrylat, Isobornyl(meth)acrylat, Lauryl(meth)acrylat, Styrol oder anderen copolymerisierbaren olefinisch ungesättigten Monomeren, wie z. B. Acrylsäure, Methacrylsäure oder Maleinsäuredimethylester.

Geeignete Polyole sind beispielsweise auch die bekannten, durch Umsetzung einfacher Glykole, wie z. B. Diethylenglykol, Triethylenglykol, 4,4'-Dioxethoxy-diphenyldimethylmethan (Addukt von 2 mol Ethylenoxid an Bisphenol A) oder Hexandiol, mit Formaldehyd erhältlichen Polyacetalpolyole oder auch durch Polykondensation cyclischer Acetale, wie z. B. Trioxan, hergestellte Polyacetale.

Weitere geeignete Polyole zur Herstellung der Polyadditionsverbindungen A2) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole ebenso wie Hydroxylgruppen enthaltende Polybutadiene.

Geeignete Amine zur Herstellung der Polyadditionsverbindungen A2) sind beispielsweise einfache aliphatische bzw. cycloaliphatische Monoamine, wie z. B. Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin.

Geeignete Amine sind auch beliebige aliphatische und cycloaliphatische Amine mit mindestens zwei primär und/oder sekundär gebundenen Aminogruppen, wie z. B. 1,2-Diaminoethan, 1,2-Diaminopropan, 1,3-Diaminopropan, 1,4-Diaminobutan, 1,2-Diamino-2-methylpropan, 1,5-Diaminopentan, 1,3-Diamino-2,2-dimethylpropan, 1,6-Diaminohexan, 1,5-Diamino-2-methylpentan, 1,6-Diamino-2,2,4-trimethylhexan, 1,6-Diamino-2,4,4-trimethylhexan, 1,7-Diaminoheptan, 1,8-Diaminooctan, 2,5-Diamino-2,5-dimethylhexan, 1,9-Diaminononan, 2-Methyl-1,8-diaminooctan, 1,10-Diaminodecan, 1,11-Diaminoundecan, 1,12-Diaminododecan, 1,2-Diaminocyclopentan, 1,2-Diaminocyclohexan, 1-Amino-3,3,5-trimethyl-5-aminomethylcyclohexan (Isophorondiamin, IPDA), 3(4)-Aminomethyl-1-methylcyclohexylamin, 1,3-Diamino-2- und/oder -4-methylcyclohexan, Isopropyl-2,4- und/oder 2,6-diaminocyclohexan, 1,3-Bis(aminomethyl)-cyclohexan, 1,8-p-Diaminomenthan, Bis(4-aminocyclohexyl)-methan, Bis(4-amino-3-methylcyclohexyl)-methan, Bis(4-amino-3,5-dimethylcyclohexyl)-methan, Bis(4-amino-2,3,5-trimethylcyclohexyl)-methan, 1,1-Bis(4-aminocyclohexyl)-propan, 2,2-Bis(4-aminocyclohexyl)-propan, 1,1-Bis(4-aminocyclohexyl)-ethan, 1,1-Bis(4-aminocyclohexyl)-butan, 2,2-Bis(4-aminocyclohexyl)-butan, 1,1-Bis(4-amino-3-methylcyclohexyl)-ethan, 2,2-Bis(4-amino-3-methylcyclohexyl)-propan, 1,1-Bis(4-amino-3,5-dimethylcyclohexyl)-ethan, 2,2-Bis(4-amino-3,5-dimethylcyclohexyl)-propan, 2,2-Bis(4-amino-3,5-dimethylcyclohexyl)-butan, 2,4-Diaminodicyclohexylmethan, 4-Aminocyclohexyl-4-amino-3-methylcyclohexyl-methan, 4-Amino-3,5-dimethylcyclohexyl-4-amino-3-methylcyclohexyl-methan und 2-(4-Aminocyclohexyl)-2-(4-amino-3-methylcyclohexyl)-methan, m-Xylylendiamin, Methyliminobispropylamin, Iminobispropylamin, Bis(6-aminohexyl)-amin, N,N-Bis(3-aminopropyl)-ethylendiamin, 4-Aminomethyl-1,8-octandiamin, Bis(aminopropyl)piperazin, Aminoethylpiperazin, Diethylentriamin, Dipropylentriamin, Triethylentetramin, Tetraethylenpentamin, Pentaethylenhexamin, Heptaethylenoctamin.

Geeignete Amine sind auch aminofunktionelle Polyalkylenglykole, wie z. B. 1,2-Bis(aminoethoxy)-ethan, 1,11-Diamino-3,6,9-trioxaundecan, 1,13-Diamino-4,7,10-trioxatride-can und insbesondere die unter dem Handelsnamen Jeffamine^{®} von Firma Huntsman Corp. kommerziell vertriebenen aminfunktionalisierten Polyalkylenglykole mit zahlenmittleren Molekulargewichten bis zu 5000, bevorzugt bis zu 2000, besonders bevorzugt bis zu 1000.

Gegebenenfalls können auch sterisch gehinderte aliphatische Diamine mit zwei sekundär gebundenen Aminogruppen zur Herstellung der Polyadditionsverbindungen A2) eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Weitere geeignete Polyamine sind darüberhinaus auch die als Vernetzerkomponenten für Epoxyharze bekannten Polyamidoamine, Polyimine und/oder Polyvinylamine.

Zur Herstellung der Polyadditionsverbindungen A2) sind schließlich auch Aminoalkohole, wie z. B. 2-Aminoethanol, die isomeren Aminopropanole und -butanole, 3-Amino-1,2-propandiol und 1,3-Diamino-2-propanol, geeignet.

Bei der Herstellung der Polyadditionsverbindungen A2) aus den isocyanatfunktionellen Uretdiongruppen enthaltenden Verbindungen A1) kommen die genannten Alkohole und/oder Amine entweder einzeln oder als Mischungen aus mindestens zwei solcher Alkohole und/oder Amine zum Einsatz.

Die Herstellung der Uretdiongruppen enthaltenden Polyadditionsverbindung A2) kann nach unterschiedlichen Methoden erfolgen, beispielsweise den literaturbekannten Verfahren zur Herstellung von Polyuretdionzusammensetzungen, wie sie z. B. in WO 99/11690 und WO 2011/115669 beispielhaft beschrieben sind.

Dabei können neben den isocyanatfunktionellen Uretdiongruppen enthaltenden Verbindungen A1) gegebenenfalls weitere monomere Isocyanate der oben genannten Art, und/oder oligomere Polyisocyanate, vorzugsweise solche mit Isocyanurat-, Biuret-, Iminooxadazindion-, Allophanat- und/oder Urethan-Struktur, in einer Menge von bis zu 30 Gew.-%, bezogen auf das Gesamtgewicht aller Reaktionspartner (umfassend die isocyanatfunktionellen Uretdiongruppen enthaltenden Verbindungen A1), Alkohole und/oder Amine) mitverwendet werden.

Die Umsetzung erfolgt vorzugsweise unter Einhaltung eines Äquivalentverhältnisses von Isocyanatgruppen zu gegenüber Isocyanaten reaktiven Gruppen von 2 : 1 bis 0,5 : 1, vorzugsweise von 1,5 : 1 bis 0,7 : 1, besonders bevorzugt von 1 : 1 bis 0,9 : 1.

In einer weiteren bevorzugten Ausführungsform handelt es sich bei den Polyadditionsverbindungen A2) um Verbindungen, die durch Umsetzung isocyanatfunktioneller, Uretdiongruppen enthaltender Verbindungen A1) mit mindestens difunktionellen Polyolen des Molekulargewichtsbereiches 62 bis 22000 und gegebenenfalls Monoalkoholen unter Einhaltung eines Äquivalentverhältnisses von Isocyanatgruppen zu gegenüber Isocyanaten reaktiven Gruppen von 2 : 1 bis 0,5 : 1 hergestellt werden.

Die Umsetzung kann lösemittelfrei oder in einem geeigneten gegenüber Isocyanatgruppen inerten Lösungsmittel durchgeführt werden.

Geeignete Lösemittel zur Herstellung der Polyadditionsverbindungen A2) sind insbesondere solche, die sich gegenüber den Isocyanatgruppen der Verbindung A1) inert verhalten, beispielsweise die bekannten üblichen aprotischen Lacklösemittel wie z. B. Ethylacetat, Isopropylacetat, Butylacetat, Isobutylacetat, Amylacetat, 2-Ethylhexylacetat, Ethylenglykolmonomethyletheracetat, Ethylenglykolmonoethyletheracetat, Ethylenglykolmonobutyletheracetat, 1-Methoxypropyl-2-acetat, 3-Methoxy-n-butylacetat, Aceton, Diethylketon, 2-Butanon, 4-Methyl-2-pentanon, Diisobutylketon Cyclohexanon, Cyclohexan, Toluol, Xylol, Chlor-benzol, Dichlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, Ethylethoxypropionat, Propylencarbonat, N-Methylpyrrolidon und N-Methylcaprolactam, Dioxan, Tetrahydrofuran oder beliebige Gemische solcher Lösemittel.

Die Umsetzung der isocyanatfunktionellen Uretdiongruppen enthaltenden Verbindungen A1) mit den Alkoholen und/oder Aminen zur Uretdiongruppen enthaltenden Polyadditionsverbindungen A2) kann unkatalysiert erfolgen. Zur Reaktionsbeschleunigung können aber auch übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undec-7-en, 1,2-Dimethylimidazol, 2-Methylimidazol, N,N-Dimethylimidazol-ß-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z. B. N,N', N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Wismut(III)-acetat, Wismut(III)-2-ethylhexanoat, Wismut(III)-octoat, Wismut(III)-neodecanoat, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutyldilaurylzinnmercaptid, oder Bleioctoat; Amidine, wie z. B. 2,3-Dimethyl-3,4,5,6-tetrahydropyrimidin; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugte Katalysatoren sind tert. Amine, Wismuth- und Zinnverbindungen der genannten Art.

Unabhängig von der Art ihrer Herstellung weisen die Uretdiongruppen enthaltenden Polyadditionsverbindungen A2) in lösemittelfreier Form in einer bevorzugten Ausführungsform einen Gehalt an freien Isocyanatgruppen von weniger als 5 Gew.-%, vorzugsweise von weniger als 2 Gew.-% und besonders bevorzugt von weniger als 1 Gew.-% auf. Ganz besonders bevorzugt sind isocyanatgruppenfreie Polyadditionsverbindungen A2).

Beim erfindungsgemäßen Verfahren wird die Uretdiongruppen aufweisende Komponente A) mit einer einer Thiolgruppe aufweisenden Komponente B) als Reaktionspartner kombiniert.

Geeignete Komponenten B) sind daneben auch Verbindungen, welche mindestens eine Thiolgruppe pro Molekül aufweisen.

Geeignete thiofunktionelle Komponenten B) sind vorzugsweise Polythiole, beispielsweise einfache Alkanthiole, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol oder 2-Methylcyclohexan-2,3-dithiol, Thioethergruppen enthaltenden Polythiole, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-trithiaundecan, 4,7-Dimercaptomethyl-1,11-dimer-capto-3,6,9-trithiaundecan, 5,7-Dimercaptomethyl-1,11-dimercapto-3,6,9-trithiaundecan, 5,6-Bis-(mercaptoethylthio)-1,10-dimercapto-3,8-dithiadecan, 4,5-Bis-(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis-(mercaptomethyl)sulfid, Bis(mercaptomethyl)disulfid, Bis(mercaptoethyl)sulfid, Bis(mercapto-ethyl)disulfid, Bis(mercaptopropyl)sulfid, Bis(mercaptopropyl)disulfid, Bis(mercaptomethyl-thio)methan, Tris(mercaptomethylthio)methan, Bis(mercaptoethylthio)methan, Tris(mercapto-ethylthio)methan, Bis(mercaptopropylthio)methan, 1,2-Bis(mercaptomethylthio)ethan, 1,2-Bis-(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercapto-ethylthio)propan, 1,2,3-Tris(mercaptopropylthio)propan, Tetrakis(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07118263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian oder 2-(3-Bis(mercaptomethyl)-2-thiapropyl)-1,3-dithiolan, Polyesterthiole, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercaptoacetat), 3-Mercapto-1,2-propandiol-bis(3-mercaptopropionat), Trimethylolpropan-tris(2-mercaptoacetat), Trimethylolpropan-tris(3-mercaptopropionat), Trimethylolethan-tris(2-mercaptoacetat), Tri-methylolethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxymethylsulfid-bis(2-mercaptoacetat), Hydroxymethylsulfid-bis(3-mercaptopropionat), Hydroxyethyl-sulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat oder Bis(2-mercaptoethylester)thiodipropionat und aromatische Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris-(mercaptomethyl)benzol, 1,2,4-Tris(mercaptomethyl)benzol, 1,3,5-Tris(mercaptomethyl)benzol, 1,2,3-Tris(mercaptoethyl)benzol, 1,3,5-Tris(mercaptoethyl)benzol, 1,2,4-Tris(mercaptoethyl)-benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercaptobenzol, 1,2,4,5-Tetramercaptobenzol, 1,2,3,4-Tetrakis(mercaptomethyl)benzol, 1,2,3,5-Tetrakis-(mercaptomethyl)benzol, 1,2,4,5-Tetrakis(mercaptomethyl)benzol, 1,2,3,4-Tetrakis(mercaptoethyl)benzol, 1,2,3,5-Tetrakis(mercaptoethyl)benzol, 1,2,4,5-Tetrakis(mercaptoethyl)benzol, 2,2'-Dimercaptobiphenyl oder 4,4'-Dimercaptobiphenyl.

Besonders bevorzugte thiofunktionelle Komponenten B) sind Polyether- und Polyesterthiole der genannten Art. Ganz besonders bevorzugt sind 4-Mercaptomethyl-1,8-dimercapto-3,6-dithiaoctan, 1,1,3,3-Tetrakis(mercaptomethylthio)propan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercapto-methyl-1,11-dimercapto-3,6,9-trithiaundecan, Trimethylolpropan-tris(2-mercaptoacetat), Trimethylolpropan-tris(3-mercaptopropionat), Pentaerythrit-tetrakis(2-mercaptoacetat) und Pentaerythrit-tetrakis(3-mercaptopropionat).

Nach einer weiteren bevorzugten Ausführungsform des erfindungsgemäßen Verfahrens und der erfindungsgemäßen Zusammensetzung liegen mindestens eine, mindestens eine Uretdiongruppe aufweisende Komponente A) und mindestens eine, eine Thiolgruppe aufweisende Komponente B) in solchen Mengen vor, dass auf jede Uretdiongruppe der Komponente A) 0,5 bis 2,0, vorzugsweise 0,7 bis 1,5, besonders bevorzugt 0,8 bis 1,2, ganz besonders bevorzugt genau eine Thiolgruppe der Komponente B) entfällt.

Zur Beschleunigung der Reaktion zwischen den Uretdiongruppen der Komponente A) und den Thiolgruppen der Komponente B) wird beim erfindungsgemäßen Verfahren mindestens ein quarternäres Ammoniumhydroxid als Katalysator C) eingesetzt.

Bei diesen Katalysatoren C) handelt es sich um Verbindungen der allgemeinen Formel 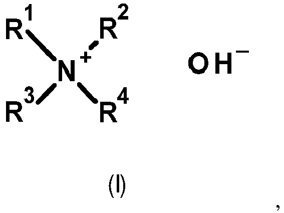 in welcher
R¹, R², R³ und R⁴ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei R¹ und R² auch in Kombination untereinander gemeinsam mit dem Stickstoffatom und gegebenenfalls mit einem weiteren Heteroatom heterocyclische Ringe mit 3 bis 8 Kohlenstoffatomen bilden können, die gegebenenfalls weiter substituiert sein können, mit der Maßgabe, dass mindestens einer der Reste R¹ bis R⁴ mindestens zwei, bevorzugt mindestens 3 Kohlenstoffatome aufweist.

Bevorzugte Katalysatoren C) sind solche der allgemeinen Formel (I), in welcher
R¹, R², R³ und R⁴ unabhängig voneinander für gleiche oder verschiedene Reste stehen, die gesättigte oder ungesättigte, lineare oder verzweigte, aliphatische, cycloaliphatische, araliphatische oder aromatische organische Reste mit 2 bis 10, bevorzugt 3 bis 10 Kohlenstoffatomen bedeuten, die substituiert oder unsubstituiert sind und/oder Heteroatome in der Kette aufweisen, wobei R¹ und R² auch in Kombination untereinander gemeinsam mit dem Stickstoffatom und gegebenenfalls mit einem weiteren Heteroatom heterocyclische Ringe mit 3 bis 5 Kohlenstoffatomen bilden können, die gegebenenfalls weiter substituiert sein können.

Besonders bevorzugte Katalysatoren C) sind solche der allgemeinen Formel (I) in welcher R¹, R², R³ und R⁴ unabhängig voneinander für gleiche oder verschiedene Reste stehen, die einen Phenyl-, Benzyl-, Phenylethylrest oder gesättigte oder ungesättigte, lineare oder verzweigte, aliphatische oder cycloaliphatische organische Reste mit 2 bis 8, bevorzugt 3 bis 8 Kohlenstoffatomen bedeuten, die substituiert oder unsubstituiert sind und/oder Heteroatome in der Kette aufweisen, wobei R¹ und R² auch in Kombination untereinander gemeinsam mit dem Stickstoffatom und gegebenenfalls mit einem weiteren Heteroatom heterocyclische Ringe mit 3 bis 5 Kohlenstoffatomen bilden können, die gegebenenfalls weiter substituiert sein können,

Als geeignete Katalysatoren C) der allgemeinen Formel (I) seien beispielhaft genannt Ethyltrimethylammoniumhydroxid, n-Hexyltrimethylammoniumhydroxid, Cyclohexyltrimethylammoniumhydroxid, Hexadecyltrimethylammoniumhydroxid, Phenyltrimethylammoniumhydroxid, Benzyltrimethylammoniumhydroxid, Diethyldimethylammoniumhydroxid, N-Ethyl-N,N-dimethylcyclohexylammoniumhydroxid Methyltriethylammoniumhydroxid, Methyltributylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetraoctadecylammoniumhydroxid, Trihexyltetradecylammoniumhydroxid, 2-Hydroxyethyltrimethylammoniumhydroxid, N,N-Dimethyl-N-dodecyl-N-(2-hydroxyethyl)ammoniumhydroxid, N-(2-Hydroxyethyl)-N,N-dimethyl-N-(2,2'-dihydroxymethylbutyl)-ammoniumhydroxid und 1-(2-Hydroxyethyl)-1,4-diazabicyclo-[2.2.2]-octanhydroxid (Monoaddukt von Äthylenoxid und Wasser an 1,4-Diazabicyclo-[2.2.2]-octan), N-Äthylpyridiniumhydroxyd

Bevorzugte Katalysatoren C) sind Tetrapropylammoniumhydroxid, Tetrabutylammoniumhydroxid, Tetrahexylammoniumhydroxid, Tetraoctylammoniumhydroxid, Hexadecyltrimethylammoniumhydroxid und Benzyltrimethylammoniumhydroxid, besonders bevorzugt Tetrabutylammoniumhydroxid, Tetrahexylammoniumhydroxid und Tetraoctylammoniumhydroxid,.

Ganz besonders bevorzugter Katalysator C) ist Tetrabutylammoniumhydroxid.

Die Katalysatoren C) kommen beim erfindungsgemäßen Verfahren in einer bevorzugten Ausführungsform entweder einzeln oder als Mischungen aus mindestens zwei solcher Katalysatoren in einer Menge von 0,001 bis 15 Gew.-%, vorzugsweise 0,005 bis 12 Gew.-%, besonders bevorzugt 0,01 bis 1 Gew.-%, bezogen auf das Gesamtgewicht der Komponenten A) und B), exklusive gegebenenfalls in diesen Komponenten vorliegender Lösemittel, Hilfs- oder Zusatzstoffe, zum Einsatz.

Das erfindungsgemäße Verfahren eignet sich hervorragend zur Herstellung von Polythiourethan-Kunststoffen und wird hierfür verwendet. Bevorzugt findet das erfindungsgemäße Verfahren zur Herstellung von Beschichtungsmitteln Anwendung. Daher sind Zusammensetzungen, vorzugsweise Beschichtungsmittel, enthaltend wenigstens eine, mindestens eine Uretdiongruppe aufweisende Komponente A), mindestens eine, mindestens eine Thiolgruppe aufweisende Komponente B) und mindestens ein quarternäres Ammoniumhydroxid als Katalysator C) sowie gegebenenfalls weitere Hilfs- und Zusatzstoffe, mit der Maßgabe, dass mindestens ein Rest des quarternäres Ammoniumhydroxids mindestens 2, bevorzugt mindestens 3 Kohlenstoffatome aufweist, ebenfalls Gegenstand der Erfindung.

Die Durchführung des erfindungsgemäßen Verfahrens und Aushärtung der erfindungsgemäßen Zusammensetzungen erfolgt in Abhängigkeit von der Aktivität des eingesetzten Katalysators in der Regel im Temperaturbereich von 20 bis 200°C, vorzugsweise von 60 bis 180°C, besonders bevorzugt von 70 bis 170°C und ganz besonders bevorzugt von 80 bis 100°C, vorzugsweise über einen Zeitraum von 1 Minute bis zu 12 Stunden, bevorzugt 30 Minuten bis 3 Stunden.

Unter diesen Bedingungen reagieren die in Komponente A) ursprünglich enthaltenen Uretdiongruppen in der Regel vollständig unter Bildung von Thioallophanatgruppen ab.

Ein weiterer Gegenstand der Erfindung ist die Verwendung mindestens einer erfindungsgemäßen Zusammensetzung zur Herstellung von Polythiourethan-Kunststoffen. Außerdem ist ein weiterer Gegenstand der Erfindung die Verwendung mindestens einer erfindungsgemäßen Zusammensetzung zur Herstellung von Beschichtungsmitteln.

Als Untergründe für die mit Hilfe der erfindungsgemäßen Zusammensetzungen formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände der Erfindung sind Beschichtungsmittel enthaltend mindestens eine erfindungsgemäße Zusammensetzung und ein Substrat, beschichtet mit einem gegebenenfalls unter Wärmeeinwirkung ausgehärteten erfindungsgemäßen Beschichtungsmittel.

Die mit den erfindungsgemäßen Zusammensetzungen formulierten Beschichtungsmittel, denen gegebenenfalls die üblichen, dem Fachmann aus der Lacktechnologie bekannten Hilfs- und Zusatzmittel, wie z. B. Lösungsmittel, UV-Stabilisatoren, Antioxidantien, Verlaufsmittel, Rheologieadditive, Slipadditive, Farbstoffe, Mattierungsmittel, Flammschutzmittel, Hydrolyseschutzmittel, Mikrobizide, Algizide, Wasserfänger, Thixotropieträger, Netzmittel, Entlüftungsmittel, Haftvermittler, Füllstoffe und/oder Pigmente, einverleibt werden können, ergeben unter den genannten Aushärtebedingungen Filme mit guten lacktechnischen Eigenschaften.

Ebenfalls Gegenstand der Erfindung sind Polythiourethan-Kunststoffe, vorzugsweise Beschichtungen, die durch Verwendung der oben beschriebenen Beschichtungsmittel erhalten wurden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate 5 von 250 s-1.

Die Rest-Monomeren Gehalte wurden nach DIN EN ISO 10283:2007-11 gaschromatographisch mit internem Standard gemessen.

Die Zusammensetzungen der Uretdion-Modellverbindungen wurden durch Gelpermationschromatographie in Anlehnung an DIN 55672-1:2016-03 (Gelpermeationschromatographie (GPC) - Teil 1: Tetrahydrofuran (THF) als Elutionsmittel) ermittelt, mit der Änderung, dass mit einer Flußrate von 0,6 ml/min statt 1,0 ml/min gearbeitet wurde. Die den Chromatogrammen entnommenen Anteile der unterschiedlichen Oligomere in Flächen-%, welche softwaregestützt ermittelt wurden, wurden näherungsweise jeweils Anteilen in Gew.-% gleichgesetzt.

Die Bestimmung der Pendeldämpfung nach König erfolgte nach DIN EN ISO 1522:2007-04 auf Glasplatten.

Zur Bestimmung der bei der Aushärtung der erfindungsgemäßen Zusammensetzungen entstehenden Uretdionfolgeprodukte erfolgte anhand protokonenentkoppelter ¹³C-NMR-Spektren (aufgenommen unter Verwendung von CDCl₃ als Lösungsmittel an einem Gerät Bruker DPX-400). Die einzelnen Strukturelemente weisen folgende chemische Verschiebungen (in ppm) auf: Uretdion: 157.1; Isocyanurat: 148.4; Die Bestimmung der Lösemittelbeständigkeit erfolgte mit Xylol als typischem Lacklösemittel. Dazu wurde eine kleine Menge des Lösemittels in ein Reagenzglas gegeben und mit einem Wattebausch an der Öffnung versehen, so dass eine mit Xylol gesättigte Atmosphäre innerhalb des Reagenzglases entstand. Das Reagenzglas wurde anschließend mit dem Wattebausch auf die Lackoberfläche gebracht und verblieben dort für 5 Min. Nach Abwischen des Lösemittels wurde der Film auf Zerstörung/Erweichung/Haftverlust geprüft. (0= keine Veränderung, 5= Film zerstört). Mit dem gleichen Verfahren wurde die Wasserfestigkeit bestimmt, so dass auch nach Einwirkung von Wasser (1 Stunde) der Film auf Zerstörung/Erweichung/Haftverlust geprüft wurde. (0= keine Veränderung, 5= Film zerstört)

### Ausgangsverbindungen

### Herstellung einer HDI-Uretdion-Modellverbindung (HDI-UD1)

### Herstellung von 1,3-bis(6-isocyanatohexyl)-1,3-diazetidin-2,4-dion

Nach dem in Beispiel 1 der EP-A 0 789 017 beschriebenen Verfahren wurde durch Tributylphosphin-katalysierte Oligomerisierung von 1,6-Diisocyanatohexan (HDI) und anschließende destillative Aufarbeitung 1,3-bis(6-isocyanatohexyl)-1,3-diazetidin-2,4-dion (ideales Bis(6-isocyanatohexyl)-uretdion) hergestellt.

| | |
|---|---|
| NCO-Gehalt: | 25,0 % |
| monomeres HDI: | < 0,03 % |
| Viskosität (23°C): | 28 mPas |

Nach gelpermeationschromatographischer Untersuchung (GPC) liegt folgende Zusammensetzung vor:

| | | |
|---|---|---|
| HDI-Uretdion (n = 2): | 99,2 % | (nach GPC) |
| HDI-Isocyanurat (n = 3): | 0,4 % | (nach GPC) |
| höhere Oligomere: | 0,4 % | (nach GPC) |

### Herstellung des Dimethylurethans Bis(6-isocyanatohexyl)-uretdions (HDI-UD1)

10 g (0,0595 val) des vorstehend beschriebenen HDI-Uretdions wurden in 30 ml Dichlormethan gelöst, mit 2 g (0,0625 mol) Methanol versetzt und bei 40°C unter trockenem Stickstoff gerührt, bis nach 8 h IR-spektroskopisch kein Isocyanat mehr nachweisbar war. Anschließend wurden Dichlomethan und überschüssiges Methanol mit Hilfe eines Rotationsverdampfers entfernt. Es lag das Dimethylurethan des Bis(6-isocyanatohexyl)-uretdions (HDI-UD1) als farbloser Feststoff vor.

| | |
|---|---|
| Uretdiongruppengehalt: | 21,0 % (berechnet als C₂N₂O₂, Molekulargewicht 84) |

### Herstellung eines HDI-Polvuretdionvernetzers (HDI-UD2)

1000 g (5,95 val) des vorstehend beschriebenen idealen Bis(6-isocyanatohexyl)-uretdions (NCO-Gehalt: 25,0 %) wurden in 800 g Butylacetat gelöst, mit 4,6 g (0,2 Gew.-%) einer 10 %igen Lösung von Dibutylzinndilaurat (DBTL) in Butylacetat versetzt und unter trockenem Stickstoff und Rühren auf 80°C erwärmt. Zu dieser Lösung wurde innerhalb von 2 Stunden eine Mischung aus 347,5 g (4,76 val) 2,2,4-Trimethylpentan-1,3-diol und 154,7 g (1,19 val) 2-Ethyl-1-hexanol zugetropft. Nach einer Rührzeit von 16 Stunden bei 80°C betrug der NCO-Gehalt < 0,2 %. Es wurde eine praktisch farblose Lösung eines HDI-Polyuretdionvernetzers (HDI-UD2) erhalten.

| | | |
|---|---|---|
| NCO-Gehalt: | 0,16 % | |
| Uretdiongruppengehalt: | 10,8% | (berechnet als C₂N₂O₂, Molekulargewicht 84) |
| Uretdion-Funktionalität: | 5 | (berechnet) |
| Festkörpergehalt:: | ca. 65 % | |
| Viskosität (23°C): | 1400 mPas | |

### Katalysatoren

TMAH: Tetramethylammoniumhydroxid 25% in Wasser; Sigma Aldrich Chemie GmbH, München, DE.

TBAH: Tetrabutylammoniumhydroxid 20% in Wasser; Sigma Aldrich Chemie GmbH, München, DE.

### Thiole

PETMP: Pentaerythrit-tetrakis(3-mercaptopropionat); Sigma Aldrich Chemie, GmbH, München, DE

GDMP: Ethylenglycol-bis(3-mercaptopropionat); BRUNO BOCK Chemische Fabrik GmbH & Co. KG

TMPMP: Trimethylolpropan-tris(3-mercaptopropionat) BRUNO BOCK Chemische Fabrik GmbH & Co. KG

### Polyol

PETHP: Pentaerythrit-tetrakis(3-hydroxypropionat), hergestellt durch Pd-katalysierte Hydrierung von Pentaerythrit-tetrakis(3-benzyloxypropionat), das nach den in Organic Letters 2007 9, 10, 1951-1954 und einer angepassten Variante des in Beilstein J. Org. Chem. 2015, 11, 233-241 beschrieben Verfahren erhalten wurde. Hierzu wurden einer Lösung von 7,5 g (9,6 mmol) des Tetrabenzylethers in 300 ml einer 1:1 Mischung von Chloroform / Methanol 750 mg Pd/C bei RT zugefügt. Das Reaktionsgemisch wurde 5 Minuten mit Argon bei RT gespült und anschließend drei Tage bei RT mit Wasserstoff umgesetzt. Nach Filtration über Celite wurde das Reaktionsgemisch am Rotationsverdampfer eingeengt und das Produkt PETHP säulenchromatographisch (SiO₂, Ethylacetat/Methanol (95 :5)) gereinigt.

### Beispiel 1 (erfindungsgemäß und Vergleich):

0,37 g (3,03 mval) PETMP wurden mit 2,10 g (2,70 mval) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt, in 1 ml Butylacetat gelöst und 10 min lang gerührt. Nach Zugabe von 0,06 g (0,05 Gew.-%, bezogen auf Festkörper) der wässrigen Tetrabutylammoniumhydroxid-Lösung als Katalysator, wurde die Mischung mittels einer Lackhantel in einer Auftrags-Schichtdicke von 150 µm auf eine entfettete Glasplatte appliziert.

Zum Vergleich wurde nach dem gleichen Verfahren aus 61 mg (0,57 mval) PETHP und 411 mg (0,52 mval) des HDI-Polyuretdionvernetzers (HDI-UD2), entsprechend einem Äquivalentverhältnis von Hydroxylgruppen zu Uretdiongruppen von 1,1 : 1, ein Beschichtungsmittel hergestellt, das in 0,2 ml Butylacetat gelöst und nach Zugabe von 0,12 mg (0,05 Gew.-%, bezogen auf Festkörper) der wässrigen Tetrabutylammoniumhydroxid-Lösung als Katalysator mittels einer Lackhantel in einer Auftrags-Schichtdicke von 150 µm auf eine entfettete Glasplatte appliziert.

Beide Lacke wurden nach 15-minütigem Ablüften bei Raumtemperatur innerhalb von 60 min bei 100°C ausgehärtet. Unter Verwendung von PETMP als Bindemittel wurde eine harte, elastische und völlig transparente Beschichtung erhalten. Das Reaktionsgemisch mit dem tetrafunktionellen Alkohol PETHP führte zu keiner Filmbildung.

Die folgende Tabelle zeigt die lacktechnischen Eigenschaften der ausgehärteten Materialen:

| | PETMP als Bindemittel (erfindungsgemäß) | PETHP als Bindemittel (Vergleich) |
|---|---|---|
| Verlauf | gut | inhomogen |
| Transparenz | durchsichtig | nicht durchsichtig |
| Filmbildung | sehr gut | keine Filmbildung |
| Lösemittelbeständigkeit | sehr gut | schlecht |
| Wasserbeständigkeit | sehr gut | nicht wasserbeständig |

### Beispiel 2 (erfindungsgemäß):

4,0 g (0,032 val) TMPMP (Festkörpergehalt: 100 %) wurden mit 21,7 g (0,027 val) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt und nach Zugabe von 0,06 g (0,05 Gew.-%, bezogen auf Festkörper) der wässrigen Tetrabutylammoniumhydroxid-Lösung als Katalysator mittels einer Lackhantel in einer Auftrags-Schichtdicke von 150 µm auf eine entfettete Glasplatte appliziert. Nach 15-minütigem Ablüften bei Raumtemperatur wurde der Lack innerhalb von 60 min bei 100°C ausgehärtet.

Man erhielt eine glatt verlaufene, farblos-transparente Beschichtung, die eine Pendeldämpfung von 60 s und eine Wasserbeständigkeit von 0 aufwies.

### Beispiel 3 (erfindungsgemäß):

4,0 g (0,038 val) GDMP (Festkörpergehalt: 100 %) wurden mit 29,1 g (0,035 val) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt und nach Zugabe von 0,3 g (0,2 Gew.-%, bezogen auf Festkörper) der wässrigen Tetrabutylammoniumhydroxid-Lösung als Katalysator mittels einer Lackhantel in einer Auftrags-Schichtdicke von 150 µm auf eine entfettete Glasplatte appliziert. Nach 15-minütigem Ablüften bei Raumtemperatur wurde der Lack innerhalb von 60 min bei 100°C ausgehärtet.

Man erhielt eine glatt verlaufene, farblos-transparente Beschichtung, die eine Pendeldämpfung von 14 s und eine Wasserbeständigkeit von 0 aufwies.

### Beispiel 4 (Vergleich):

4,0 g (0,033 val) PETMP wurden mit 23,2 g (0,030 val) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt, in 10 ml Butylacetat gelöst und 10 min lang gerührt. Nach Zugabe von 0,03 g (0,025 Gew.-%, bezogen auf Festkörper) der wässrigen Tetramethylammoniumhydroxid-Lösung als Katalysator, wurde die Mischung mittels einer Lackhantel in einer Auftrags-Schichtdicke von 150 µm auf eine entfettete Glasplatte appliziert.

Man erhielt eine Beschichtung mit einer Pendeldämpfung von 168 s und einer Wasserbeständigkeit von 0, die aber seinen sehr schlechten Verlauf und extrem viele Blasen aufwies.

### Beispiel 5 (Vergleich):

4,0 g (0,032 val) TMPMP wurden mit 21,7 (0,027 val) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt, in 10 ml Butylacetat gelöst und 10 min lang gerührt. Nach Zugabe von 0.03 g (0,025 Gew.-%, bezogen auf Festkörper) der wässrigen Tetramethylammoniumhydroxid-Lösung als Katalysator, wurde die Mischung mittels einer Lackhantel in einer Auftrags-Schichtdicke von 150 µm auf eine entfettete Glasplatte appliziert.

Man erhielt eine Beschichtung mit einer Pendeldämpfung von 146 s und eine Wasserbeständigkeit von 0, die aber einen sehr schlechten Verlauf sowie extrem viele Blasen und Stippen aufwies.

### Beispiel 6 (erfindungsgemäß):

4 g (0,033 val) PETMP: Pentaerythritol tetrakis (3-mercaptopropionat) wurden mit 23,2 g (0,030 val) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt, in 10 ml Butylacetat gelöst und 10 min lang gerührt. Nach Zugabe von 0,68 g (0,025 Gew. %, bezogen auf Festkörper) einer 5:95-Mischung (Gewicht) der wässrigen Tetrabutylammoniumhydroxid-Lösung mit Dimethylsulfoxid (DMSO) als Katalysator, wurde die Mischung mittels einer Lackhantel in einer Auftrags-Schichtdicke von 150 µm auf eine entfettete Glasplatte appliziert.

Man erhielt eine glatt verlaufene, farblos-transparente Beschichtung, die eine Pendeldämpfung von 182 s und eine Wasserbeständigkeit von 0 aufwies.

### Beispiel 7 (erfindungsgemäß):

4,0 g (0,032 val) TMPMP wurden mit 21,7 (0,027 val) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt, in 10 ml Butylacetat gelöst und 10 min lang gerührt. Nach Zugabe von 0,64 g (0,025 Gew. %, bezogen auf Festkörper) einer 5:95-Mischung (Gewicht) der wässrigen Tetrabutylammoniumhydroxid-Lösung mit DMSO als Katalysator, wurde die Mischung mittels einer Lackhantel in einer Auftrags-Schichtdicke von 150 µm auf eine entfettete Glasplatte appliziert.

Man erhielt eine glatt verlaufene, farblos-transparente Beschichtung, die eine Pendeldämpfung von 142 s und eine Wasserbeständigkeit von 0 aufwies.

### Beispiel 8 (Vergleich):

4,0 g (0,033 val) PETMP wurden mit 23,2 g (0,030 val) des HDI-Polyuretdionvernetzers (HDI-UD2) entsprechend einem Äquivalentverhältnis von Thiolgruppen zu Uretdiongruppen von 1,1 : 1 zu einem Beschichtungsmittel gemischt, in 5 ml Butylacetat gelöst und 10 min lang gerührt. Als Katalysator wurden 0,013 g (0,05 Gew. %, bezogen auf Festkörper) 1,8-Diazabicyclo[5.4.0]undec-7ene (DBU) zugegeben.

Die Reaktionsmischung gelierte sofort. Es konnte keine Beschichtung appliziert werden.

## Patentansprüche

1. Verfahren zur Herstellung von Thioallophanatgruppen enthaltenden Verbindungen, umfassend Umsetzung von
A) mindestens einer, mindestens eine Uretdiongruppe aufweisende Komponente mit
B) mindestens einer, mindestens eine Thiolgruppe aufweisenden Komponente in Gegenwart von
C) mindestens einem Katalysator der allgemeinen Formeln 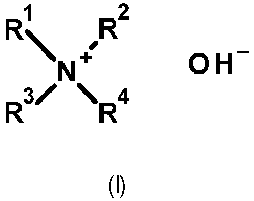 in welcher
R¹, R², R³ und R⁴ unabhängig voneinander für gleiche oder verschiedene Reste stehen, die gesättigte oder ungesättigte, lineare oder verzweigte, aliphatische, cycloaliphatische, araliphatische oder aromatische organische Reste mit 1 bis 18 Kohlenstoffatomen bedeuten, die substituiert oder unsubstituiert sind und/oder Heteroatome in der Kette aufweisen, wobei R¹ und R² auch in Kombination untereinander gemeinsam mit dem Stickstoffatom und gegebenenfalls mit einem weiteren Heteroatom heterocyclische Ringe mit 3 bis 8 Kohlenstoffatomen bilden können, die gegebenenfalls weiter substituiert sein können, mit der Maßgabe, dass mindestens einer der Reste R¹ bis R⁴ mindestens zwei Kohlenstoffatome aufweist.

2. Verfahren gemäß Anspruch 1, **dadurch gekennzeichnet, dass** es sich bei der Komponente A) um eine isocyanatfunktionelle Uretdiongruppen enthaltende Verbindungen A1) und/oder durch Umsetzung isocyanatfunktioneller Uretdiongruppen enthaltender Verbindungen A1) mit Alkoholen und/oder Aminen erhältliche Polyadditionsverbindungen A2) handelt.

3. Verfahren gemäß Anspruch 2, **dadurch gekennzeichnet, dass** es sich bei der Komponente A1) um Uretdiongruppen enthaltende Verbindungen auf Basis von PDI, HDI, IPDI, XDI, NBDI und/oder H₁₂-MDI handelt, die bevorzugt eine mittlere NCO-Funktionalität von mindestens 1,6 aufweisen und besonders bevorzugt einen Gehalt an Uretdionstrukturen (berechnet als C₂N₂O₂, Molekulargewicht = 84) von 10 bis 25 Gew.-% aufweisen.

4. Verfahren gemäß Anspruch 2 oder 3, **dadurch gekennzeichnet, dass** es sich bei den Polyadditionsverbindungen A2) um Verbindungen handelt, die durch Umsetzung isocyanatfunktioneller, Uretdiongruppen enthaltender Verbindungen A1) mit mindestens difunktionellen Polyolen des Molekulargewichtsbereiches 62 bis 22000 und gegebenenfalls Monoalkoholen unter Einhaltung eines Äquivalentverhältnisses von Isocyanatgruppen zu gegenüber Isocyanaten reaktiven Gruppen von 2 : 1 bis 0,5 : 1 hergestellt werden.

5. Verfahren gemäß einem der Ansprüche 2 bis 4, **dadurch gekennzeichnet, dass** die Uretdiongruppen enthaltenden Polyadditionsverbindungen A2) in lösemittelfreier Form einen Gehalt an freien Isocyanatgruppen von weniger als 5 Gew.-% aufweisen.

6. Verfahren gemäß einem der Ansprüche 1 bis 5, **dadurch gekennzeichnet, dass** es sich bei der Komponente B) um mindestens difunktionelle Polyole des Molekulargewichtsbereiches 62 bis 22000 handelt.

7. Verfahren gemäß einem der Ansprüche 1 bis 6, **dadurch gekennzeichnet, dass** die Komponenten A) und B) in solchen Mengen vorliegen, dass auf jede Uretdiongruppe der Komponente A) 0,5 bis 2,0 Thiolgruppen der Komponente B) entfällt.

8. Verfahren gemäß einem der Ansprüche 1 bis 7, **dadurch gekennzeichnet, dass** es sich bei der Komponente C) um Verbindungen der allgemeinen Formel (I) handelt, in welcher
R¹, R², R³ und R⁴ unabhängig voneinander für gleiche oder verschiedene Reste stehen, die gesättigte oder ungesättigte, lineare oder verzweigte, aliphatische, cycloaliphatische, araliphatische oder aromatische organische Reste mit 2 bis 10, bevorzugt 3 bis 10 Kohlenstoffatomen bedeuten, die substituiert oder unsubstituiert sind und/oder Heteroatome in der Kette aufweisen, wobei R¹ und R² auch in Kombination untereinander gemeinsam mit dem Stickstoffatom und gegebenenfalls mit einem weiteren Heteroatom heterocyclische Ringe mit 3 bis 5 Kohlenstoffatomen bilden können, die gegebenenfalls weiter substituiert sein können,

9. Verfahren gemäß einem der Ansprüche 1 bis 8, **dadurch gekennzeichnet, dass** es sich beim Katalysator C) um Tetrapropylammoniumhydroxid, Tetrabutylammoniumhydroxid, Tetrahexylammoniumhydroxid, Tetraoctylammoniumhydroxid, Hexadecyltrimethylammoniumhydroxid und Benzyltrimethylammoniumhydroxid, bevorzugt um Tetrabutylammoniumhydroxid, Tetrahexylammoniumhydroxid und Tetraoctylammoniumhydroxid, besonders bevorzugt um Tetrabutylammoniumhydroxid handelt.

10. Verfahren gemäß einem der Ansprüche 1 bis 9, **dadurch gekennzeichnet, dass** die Komponente C) in einer Menge von 0,001 bis 15 Gew.-%, bezogen auf das Gesamtgewicht der Komponenten A) und B), exklusive gegebenenfalls in diesen Komponenten vorliegender Lösemittel, Hilfs- oder Zusatzstoffe, zum Einsatz kommt.

11. Zusammensetzung enthaltend wenigstens eine, mindestens eine Uretdiongruppe aufweisende Komponente A), mindestens eine, mindestens eine Thiolgruppe aufweisende Komponente B) und mindestens ein quarternäres Ammoniumhydroxid als Katalysator C) sowie gegebenenfalls weitere Hilfs- und Zusatzstoffe, mit der Maßgabe, dass mindestens ein Rest des quarternäres Ammoniumhydroxids mindestens 2 Kohlenstoffatome aufweist.

12. Verwendung von Zusammensetzungen gemäß Anspruch 11 zur Herstellung von Polythiourethan-Kunststoffen oder Beschichtungsmitteln.

13. Beschichtungsmittel enthaltend mindestens eine Zusammensetzung gemäß Anspruch 11.

14. Substrat, beschichtet mit einem gegebenenfalls unter Wärmeeinwirkung ausgehärteten Beschichtungsmittel gemäß Anspruch 13.

15. Polythiourethan-Kunststoff, erhältlich oder hergestellt aus einer gegebenenfalls unter Wärmeeinwirkung ausgehärteten Zusammensetzung gemäß Anspruch 11.
